# EUROPEAN PATENT SPECIFICATION

(11) **EP 0 533 420 B1**
(45) Date of publication and mention of the grant of the patent: **21.06.1995**
(21) Application number: 92308348.9
(22) Date of filing: 14.09.1992
(51) Int. Cl.: B23K 9/20

(54) **Weld stud**
Schweissbolzen
Goujon à souder

(30) Priority: 17.09.1991 DE 9111565 U
(43) Date of publication of application: 24.03.1993
(73) Proprietor: EMHART INC., Newark, Delaware 19711 (US)
(72) Inventor: Werner, Wolfgang, W-7410 Reutlingen 27 (DE)
(74) Representative: Stagg, Diana Christine

(56) References cited:
- DE-A- 3 022 054
- DE-U- 8 713 476
- US-A- 3 182 173

## Description

The present invention relates to a weld stud consisting of a shank and a flange adjacent thereto, the flange having a weld portion remote from the shank for welding the weld stud onto a metallic article. Weld studs of this known design are, for example, very frequently used in the production of motor vehicles in order to fasten brake hoses, fuel lines, electric leads and the like.

The weld stud is preferably welded on by a stud welding process, in particular a condenser discharge arc stud welding process in which a blunt stud having a conical or curved welding surface is used. For achieving reliable strength values and clean welds, there are used, according to DE 30 22 054 A1, blunt studs, which have a conical or curved weld face for contact with the metallic article and of which the weld faces have an annular recess surrounded on the interior by a conical or curved region and on the exterior by an external rim on the edge of the weld face, the centre of the welding surface projecting axially beyond the external rim so that it touches the metallic article and centres a guiding arc on the axis of the weld stud.

Owing to the projection of the centre of the welding surface beyond the external rim, it may happen, despite the provision of an annular recess between the weld zone and the outer rim, that the molten metal produced during the welding process sprays in an uncontrolled manner with the described design of the weld stud. After the weld stud has been welded onto a metallic article or a metal plate, the weld is exposed in the case of a weld stud without an external rim and this can lead to corrosion at this weld. In the case of a weld stud with an external rim and a recess between the rim and the centre of the welding surface, the risk of corrosion at the weld is reduced but not completely eliminated since it cannot be guaranteed that the rim makes an air-tight connection with the metallic article.

It is therefore the object of the present invention to develop a known weld stud such that no beads of welding material spray out in an uncontrolled manner during the welding process and that the weld is not exposed after the welding of the weld stud onto a metallic article.

According to the invention, a weld stud with a shank and a flange, the flange being provided with a weld portion remote from the shank, is characterised by the provision of a non-metallic, insulating, preferably dense sealing ring on the weld portion. As a result, a weld between a weld stud and a metallic article is no longer exposed, and so it is resistant to corrosion, and spraying beads of welding material are retained. It is a further advantage of the invention that the welds, which are not particularly attractive, are no longer visible.

The weld stud is advantageously developed by the features mentioned in the sub-claims.

The sealing ring, which is arranged on the weld stud before the weld stud is welded onto a metallic article is preferably formed from a heat-resistant elastomer e.g. by casting.

Suitable heat-resistant elastomers for use in the invention are the fluoroelastomer sold by duPont as VITON (Registered Trade Mark) and the ethylene acrylate synthetic rubber sold by duPont as VAMAC.

The weld portion of the weld stud preferably has a short truncated cone shaped region with flat flanks which is directly adjacent to the flange, a longer cylindrical region onto which the sealing ring is pressed and a short conical region of which the tip is connected directly to the metallic article during welding. The internal diameter advantageously has a smaller height than the external diameter of the sealing ring, forming slopes from the external terminal edges to the internal terminal edges of the sealing ring, the angle of the slopes corresponding to the angle of the flank of the truncated cone shaped region of the weld portion, and it is particularly advantageous if the sealing ring is symmetrical with respect to the axis extending through the centre of its height. This has the advantage that the sealing ring can completely surround the weld portion. The symmetry of the sealing ring allows simple production of the sealing ring. For secure holding of the sealing ring on the cylindrical region, the internal diameter of the sealing ring can be provided with curvature in the direction of the external diameter.

In order that the invention be better understood, a preferred embodiment will now be described in greater detail by way of example with reference to the accompanying drawings in which:-
Figure 1 shows a weld stud with a sealing ring according to the invention;
Figure 2 is a side view of the sealing ring shown in Figure 1; and
Figure 3 is a plan view of the sealing ring shown in Figure 1.

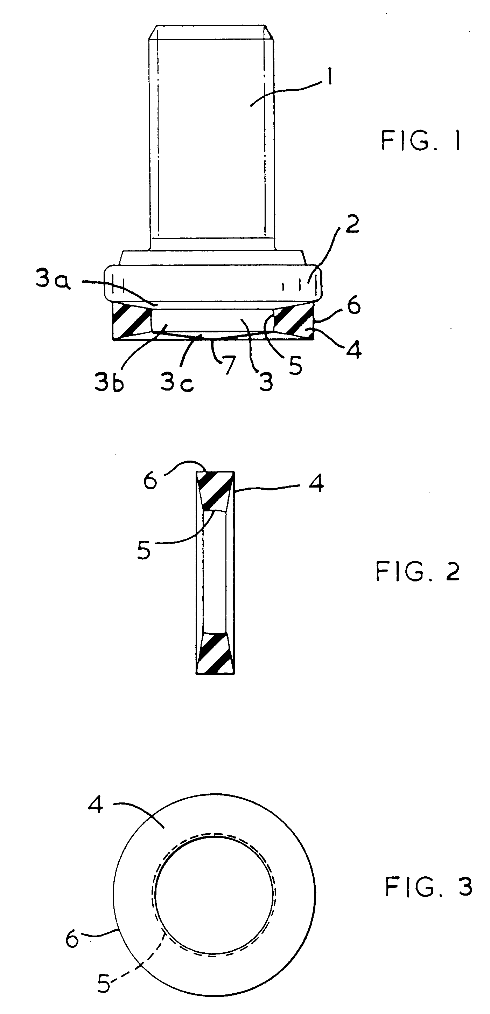

Figure 1 shows an embodiment of the weld stud according to the invention in which a flange 2 arranged on a shank 1 and a weld portion 3 adjacent thereto can be seen, the weld portion 3 being provided with a sealing ring 4 made of VITON (Registered Trade Mark) fluoroelastomer. The weld portion 3 has a truncated cone shaped region 3a connected directly to the flange 2, a cylindrical region 3b adjacent thereto and a further conical region 3c adjacent to the cylindrical region. The sealing ring 4 pressed onto the cylindrical region 3b has an internal diameter 5 of which the height is smaller than the height of its external diameter 6. The sealing ring is also designed such that it is symmetrical about an axis extending in the centre of the height of the sealing ring 4. It can be seen that the sealing ring 4 rests tightly on the truncated cone shaped region 3a and the cylindrical region 3b of the weld portion 3 owing to its advantageous design. The tip of the conical region 3c of the weld portion does not come into close contact with the sealing ring 4 because the sealing ring 4 also has a taper from its external to its internal edge on this side remote from the shank 1 and the flange 2. The cone tip 7 extends longitudinally to the height of the external diameter 6 of the sealing ring 4 which, in conjunction with the different respective heights of the internal diameter 5 and of the external diameter 6, allows the weld stud to be welded by the conical tip 7 onto a metallic article without the sealing ring 4 being affected by the welding process.

## Claims

1. Weld stud with a shank (1) and a flange (2) which is adjacent thereto and has a weld portion (3) on the side remote from the shank (1), characterised in that a non-metallic, insulating, preferably dense, sealing ring (4) is provided on the weld portion (3).

2. Weld stud according to Claim 1, wherein the sealing ring (4) is formed from a heat-resistant elastomer, e.g. by casting.

3. Weld stud according to Claim 1 or 2, wherein the weld portion (3) has a truncated cone shaped region (3a), a cylindrical region (3b) and a conical region (3c).

4. Weld stud according to Claim 3, wherein the sealing ring (4) is pressed onto the cylindrical region (3b) before a welding process is carried out.

5. Weld stud according to any one of the preceding claims, wherein the internal diameter (5) of the sealing ring (4) has a smaller height than the external diameter (6) of the sealing ring (4).

6. Weld stud according to Claim 5, wherein the sealing ring (4) is designed symmetrically with respect to an axis extending through the vertical centre of the sealing ring (4).

7. Weld stud according to Claim 5 or 6, wherein the internal diameter (5) of the sealing ring (4) has curvature in the direction of the external diameter (6) of the sealing ring (4).

## Patentansprüche

1. Schweißbolzen mit einem Schaft (1) und einem Flansch (2), der an den Schaft angrenzt und einen Schweißabschnitt (3) auf der vom Schaft (1) entfernten Seite aufweist, dadurch gekennzeichnet, daß ein nicht metallischer, isolierender, vorzugsweise kompakter Dichtring (4) auf dem Schweißabschnitt (3) vorgesehen ist.

2. Schweißbolzen nach Anspruch 1, bei dem der Dichtring (4) aus einem wärmebeständigen Elastomer gebildet ist, beispielsweise durch Gießen.

3. Schweißbolzen nach Anspruch 1 oder 2, bei dem der Schweißabschnitt (3) einen abgestumpften kegelförmigen Bereich (3a), einen zylindrischen Bereich (3b) und einen konischen Bereich (3c) aufweist.

4. Schweißbolzen nach Anspruch 3, bei dem der Dichtring (4) auf den zylindrischen Bereich (3b) gepreßt wird, ehe ein Schweißverfahren durchgeführt wird.

5. Schweißbolzen nach irgendeinem der vorhergehenden Ansprüche, bei dem der Innendurchmesser (5) des Dichtringes (4) eine kleinere Höhe als der Außendurchmesser (6) des Dichtringes (4) aufweist.

6. Schweißbolzen nach Anspruch 5, bei dem der Dichtring (4) symmetrisch in Bezug auf eine Achse ausgebildet ist, die sich durch die senkrechte Mitte des Dichtringes (4) erstreckt.

7. Schweißbolzen nach Anspruch 5 oder 6, bei der Innendurchmesser (5) des Dichtringes (4) eine Krümmung in Richtung des Außendurchmessers (6) des Dichtrings (4) aufweist.

## Revendications

1. Goujon à souder comprenant une tige (1) et une bride (2) qui lui est voisine et une partie à souder (3) sur le côté opposé à la tige (1), caractérisé en ce qu'une bague d'étanchéité (4) non métallique, isolante, de préférence dense, est prévue sur la partie à souder (3).

2. Goujon à souder selon la revendication 1, dans lequel la bague d'étanchéité (4) est formée d'un élastomère thermo-résistant, par exemple, par coulée.

3. Goujon à souder selon la revendication 1 ou 2, dans lequel la partie à souder (3) a une région de forme tronconique (3a), une région cylindrique (3b) et une région conique (3c).

4. Goujon à souder selon la revendication 3, dans lequel la bague d'étanchéité (4) est pressée sur la région cylindrique (3b) avant que l'opération de soudage ne soit réalisée.

5. Goujon à souder selon l'une quelconque des revendications précédentes, dans lequel le diamètre interne (5) de la bague d'étanchéité (4) a une hauteur moindre que le diamètre externe (6) de la bague d'étanchéité (4).

6. Goujon à souder selon la revendication 5, dans lequel la bague d'étanchéité (4) est conçue de manière symétrique par rapport à un axe s'étendant à travers le centre dans la direction verticale de la bague d'étanchéité (4).

7. Goujon à souder selon la revendication 5 ou 6, dans lequel le diamètre interne (5) de la bague d'étanchéité (4) présente une courbure dans la direction du diamètre externe (6) de la bague d'étanchéité (4).
